# EUROPÄISCHE PATENTSCHRIFT

(11) **EP 2 451 606 B1**
(45) Veröffentlichungstag und Bekanntmachung des Hinweises auf die Patenterteilung: **11.05.2016**
(21) Anmeldenummer: 10728236.0
(22) Anmeldetag: 05.07.2010
(51) Int. Cl.: B23K 1/20

(54) **VERFAHREN ZUM FLUIDDICHTEN VERBINDEN VON ZWEI BAUELEMENTEN ZUR HERSTELLUNG EINER FLUIDDICHTEN EINHEIT**
METHOD FOR CONNECTING TWO COMPONENTS IN A FLUID-TIGHT MANNER FOR PRODUCING A FLUID-TIGHT UNIT
PROCÉDÉ POUR LA LIAISON ÉTANCHE AUX FLUIDES DE DEUX ÉLÉMENTS DE CONSTRUCTION POUR LA FABRICATION D'UNE UNITÉ ÉTANCHE AUX FLUIDES

(30) Priorität: 07.07.2009 DE 102009032193
(43) Veröffentlichungstag der Anmeldung: 16.05.2012
(73) Patentinhaber: MAHLE Behr GmbH & Co. KG, 70469 Stuttgart (DE)
(72) Erfinder: HECKENBERGER, Thomas, 5837 Fentange (LU); HIRSCH, Stefan, 70180 Stuttgart (DE); MOLDOVAN, Florin, 70569 Stuttgart (DE); FEHRENBACHER, Christoph, 70597 Stuttgart (DE); HERRMANN, Hans-Georg, 66132 Saarbrücken (DE)
(74) Vertreter: Grauel, Andreas
(86) Internationale Anmeldenummer: PCT/EP2010/059537
(87) Internationale Veröffentlichungsnummer: WO 2011/003849

(56) Entgegenhaltungen:
- EP-A1- 1 136 782
- NL-C2- 1 020 749

## Beschreibung

Die vorliegende Erfindung bezieht sich auf ein Verfahren zum fluiddichten Ver-binden gemäß Anspruch 1 und gemäß Anspruch 4 (siehe z.B. EP-A-1136782).

Im Bereich der Wärmetauschertechnik werden oftmals Bleche oder andere Bauelemente miteinander verbunden, insbesondere verlötet, um Kühfungsrohre oder andere Wärmetauscherkomponenten herzustellen. Ein Verbund aus mehreren aufeinander liegenden Blechen, die durch Löten zu einer festen und für Fluide dichten Einheit verbunden werden, eignet sich für verschiedene Anwendungsfälle, unter anderem zur Herstellung von komplexen Kanal- oder Tragstrukturen für Heiz- bzw. Kühlaufgaben beispielsweise zur Kühlung von Balteriezellen.

In der DE 195 28 116 B4 ist beispielsweise ein Verfahren zur Herstellung eines Wärmeübertragers mit Platten-Sandwich-Struktur beschrieben. Bei der Herstellung der Strukturen in den einzelnen Blechen entstehen durch mechanische Schneidprozesse zwangsläufig Grate, die für die anschließende Verlötung kontraproduktiv sind, da die Grate als Abstandshalter zwischen den Blechen wirken. Auch verhältnismäßig kleine Abstände können hier bereits zu einer mangelhaften Verlötung bzw. zur Undichtheit führen. Grate müssen daher mechanisch entfernt werden. Dies ist zeitaufwändig und daher teuer. Falls sich die Grate auf der lotplattierten Seite befinden wird dadurch auch Lot mit entfernt.

Weiterhin kommen aus wirtschaftlichen Gründen flächig lotplattierte Bleche zum Einsatz, was lokal zu einem Überangebot von Lot und damit zu unerwünschten Verengungen bzw. Verschlüssen in den Kanälen führen kann.

Es ist die Aufgabe der vorliegenden Erfindung ein verbessertes Verfahren zum fluiddichten Verbinden von zwei Bauelementen zur Herstellung einer fluiddichten Einheit sowie eine Kühlungseinheit zu schaffen. Dabei sollen die Nachteile beim Stand der Technik umgangen werden und zugleich wirtschaftlichere Lösungen als im Stand der Technik bereitgestellt werden.

Diese Aufgabe wird durch das Verfahren gemäß den Ansprüchen 1 und 4 gelöst. Günstige Ausführungsformen der Erfindung werden durch die Unteransprüche definiert.

Die vorliegende Erfindung schafft ein Verfahren zum fluiddichten Verbinden von zwei Bauelementen zur Herstellung einer fluiddichten Einheit, wobei das Verfahren die folgenden Schritte aufweist:
- Bereitstellen zumindest eines ersten Bauelementes, das einen Schneidgrat auf einer Hauptoberfläche aufweist;
- Zusammenfügen des ersten Bauelementes mit zumindest einem zweiten Bauelement, wobei das Zusammenfügen derart erfolgt, dass eine Hauptoberfläche des zweiten Bauelementes die Hauptoberfläche des ersten Bauelementes kontaktiert und der Schneidgrat um zumindest einen vorbestimmten Abstand von einer Seitenoberfläche des zweiten Bauelementes angeordnet ist; und
- Fluiddichtes Verbinden, insbesondere Verlöten des ersten und zweiten Bauelementes, um die fluiddichte Einheit herzustellen.

Eine derartige Ausführungsform der vorliegenden Erfindung basiert auf der Erkenntnis, dass beim Zusammenverfügen des ersten Bauelements mit dem zweiten Bauelement ein Überstand desjenigen Teils des ersten Bauelements mit dem Grat erreicht wird. Der Schneidgrat kann daher keinen ungewünschten Abstand zwischen dem ersten und zweiten Bauelement verursachen, der eine fluiddichtes Verbinden der beiden Bauelemente verhindern oder zumindest stören könnte. Der Vorteil einer derartigen Ausführungsform besteht darin, dass nunmehr durch einen geringen zusätzlichen Materialverbrauch in Form eines Überstands mit dem Schneidgrat vermieden werden kann, dass ein Arbeitsschritt des Entgratens erforderlich ist. Hierdurch lassen sich die Herstellungskosten für eine fluiddichte Einheit reduzieren.

Insbesondere kann im Schritt des Zusammenfügens der Schneidgrat auf der Hauptoberfläche des ersten Bauelementes in einem Abstand von 0,5 mm bis 3 mm von der Seitenoberfläche des zweiten Bauelementes angeordnet werden. Eine derartige Ausführungsform der vorliegenden Erfindung stellt sicher, dass der Schneidgrat keine Auswirkungen auf das fluiddichte Verbinden des ersten mit dem zweiten Bauelement hat. Zugleich kann sichergestellt werden, dass sich der zusätzliche Materialverbrauch durch das Vorsehen des Überstands nicht zu stark erhöht.

Auch kann in einer weiteren Ausführungsform der Erfindung der Schritt des Zusammenfügens derart ausgeführt werden, dass die Seitenoberfläche des zweiten Bauelementes mit der Hauptoberfläche des ersten Bauelementes oder einer Hauptoberfläche eines weiteren Bauelementes im Wesentlichen einen Winkel von 90° bildet. Eine derartige Ausführungsform der vorliegenden Erfindung bietet den Vorteil, dass sich zuverlässig ein belastbarer und/oder sicherer Lötmeniskus ausbilden kann.

Ferner schafft die vorliegende Erfindung ein Verfahren zum fluiddichten Verbinden von zwei Bauelementen zur Herstellung einer fluiddichten Einheit, wobei das Verfahren die folgenden Schritte aufweist:
- Bereitstellen eines ersten Bauelementes mit einem konischen Seitenschnitt, wobei das erste Bauelement einen Schneidgrat aufweist, der von derjenigen Hauptoberfläche des ersten Bauelementes absteht, die einen kleineren Winkel zum Seitenschnitt aufweist;
- Bereitstellen eines zweiten Bauelementes mit einem konischen Seitenschnitt, wobei das zweite Bauelement einen Schneidgrat aufweist, der von derjenigen Hauptoberfläche des zweiten Bauelementes absteht, die einen kleineren Winkel zum Seitenschnitt aufweist; und
- Fluiddichtes Verbinden des ersten Bauelementes mit dem zweiten Bauelement, um die fluiddichte Einheit herzustellen, wobei der Schneidgrat des ersten Bauelementes im Wesentlichen mit dem Schneidgrat des zweiten Bauelementes ausgerichtet ist und der Schneidgrat des zweiten Bauelementes an der von dem ersten Bauelement abgewandten Hauptoberfläche des zweiten Bauelementes angeordnet ist.

Eine derartige Ausführungsform der vorliegenden Erfindung basiert auf der Erkenntnis, dass sich beim konischen Schneiden des ersten und zweiten Bauelements ein Schneidgrat ausbildet, der an einer äußersten Schnittkante angeordnet ist. Werden nun zwei Bauelemente, die beide konisch geschnitten sind, derart übereinander geschichtet, dass die Schneidgrate im Wesentlichen übereinander angeordnet sind, kann durch den konischen Schnitt, insbesondere beim zweiten Bauelement, eine Unterhöhlung erreicht werden, die eine sichere fluiddichte Verbindung zwischen dem ersten und zweiten Bauelement ermöglicht. Insbesondere würde dann durch den Schneidgrat des ersten Bauelements kein unerwünschter Abstand zwischen dem ersten und zweiten Bauelement verursacht, der eine fluiddichte Verbindung zwischen dem ersten und zweiten Bauelement verhindern oder stören könnte.

Die vorliegende Erfindung entsprechend den vorstehend beschriebenen Ausführungsformen basiert auf dem einheitlichen erfinderischen Gedanken, dass ein durch das Zuschneiden entstehender Schneidgrat nicht mehr entfernt werden braucht, sondern vor oder bei dem Verbinden der beiden Bauelemente aus dem Spalt zwischen dem ersten und zweiten Bauelement herausgehalten wird. Dies kann einerseits dadurch erfolgen, dass der Schneidgrat auf eine der Verbindungsfuge zwischen dem ersten und zweiten Bauelement abgewandten Seite ausgerichtet wird oder dass der Schneidgrat seitlich von einem der beiden Bauelemente so weit herausragt, dass er nicht als Abstandshalter in der Verbindungszone wirken kann.

Insbesondere kann das Verfahren zum fluiddichte Verbinden von zwei Bauelementen zur Herstellung einer fluiddichten Einheit die folgenden Schritte aufweisen:
- Bereitstellen zumindest eines ersten Bauelementes, das zumindest eine Ausnehmung oder Öffnung aufweist;
- Bereitstellen zumindest eines zweiten Bauelementes, das zumindest einseitig eine Lotplattierung aufweist, wobei die Lotplattierung in zumindest einem Bereich eine Plattierungsöffnung aufweist;
- Zusammenfügen des ersten Bauelementes mit einem zweiten Bauelement, wobei die Ausnehmung oder Öffnung des ersten Bauelementes mit der Plattierungsöffnung des zweiten Bauelements ausgerichtet ist; und
- Fluiddichtes Verbinden, insbesondere Verlöten, des ersten Bauelementes mit dem zweiten Bauelement, um die fluiddichte Einheit herzustellen.

Eine derartige Ausführungsform der vorliegenden Erfindung bietet den Vorteil, dass eine Verengung eines durch die Öffnung oder die Ausnehmung des ersten Bauelementes im Zusammenwirken mit dem zweiten Bauelement gebildeten Kanals durch ein aufschmelzendes und in den Kanal einlaufendes Lot verhindert werden kann. Dies erfolgt in einfacher Weise durch die Entfernung der Lotplattierung am zweiten Bauelement in denjenigen Bereichen, die nach dem Zusammenfügen den Ausnehmungen oder Öffnungen des ersten Bauelementes gegenüberliegen sollen. Hierdurch kann auch bei der Herstellung von kleinen Kapillarkanälen zuverlässig die gewünschte Form sichergestellt werden. Eine derartige Ausführungsform der Erfindung bietet den Vorteil, dass durch eine einfache und kostengünstige Maßnahme bei der Herstellung der fluiddichten Einheit größere Ausschussraten verhindert werden können.

Insbesondere kann das Verfahren zum fluiddichte Verbinden von zwei Bauelementen zur Herstellung einer fluiddichte Einheit, die folgenden Schritte aufweisen:
-- Bereitstellen zumindest eines ersten Bauelementes; und
-- Bereitstellen eines zweiten Bauelementes das zumindest eine Ausnehmung aufweist, wobei die Ausnehmung eine Größe hat, so dass ein Kontaktbereich zwischen dem ersten und dem zweiten Bauelement höchstens eine seitliche Ausdehnung von 10 mm aufweist; und
-- Fluiddichtes Verbinden, insbesondere Verlöten des ersten und zweiten Bauelementes, um die fluiddichte Einheit herzustellen, wobei beim Verbinden das erste Bauelemente in dem Kontaktbereich stoffschlüssig mit dem zweiten Bauelemente verbunden ist und in einem Bereich der Ausnehmung das erste Bauelement mit dem zweiten Bauelemente nicht stoffschlüssig verbunden ist.

Eine derartige Ausführungsform der vorliegenden Erfindung basiert auf der Erkenntnis, dass eine zuverlässige und stabile Verbindung zwischen dem ersten und zweiten Bauelemente erreicht werden kann, wenn die Verbindung der beiden Bauelementes über einen Kontaktbereich erfolgt, dessen seitliche Ausdehnung (d.h. dessen Ausdehnung entlang der Oberflächen des ersten und zweiten Bauelements) höchstens 10 Millimeter aufweist. Insbesondere bei einen Verlöten kann durch diese Maßnahme sichergestellt werden, dass ein Flussmittel, das durch die Hitzeeinwirkung in den gasförmigen Zustand übergeht, sicher aus dem Kontaktbereich entweichen kann und somit keine Gaseinschlüsse im Kontaktbereich bewirkt. Durch solche Gaseinschlüsse könnte die Stabilität der Verbindung beeinträchtigt werden. Der Vorteil einer solchen Ausführungsform der vorliegenden Erfindung besteht somit darin, durch eine einfache Maßnahme eine stabile fluiddichte Verbindung herzustellen.

Insbesondere kann das Verfahren zum fluiddichten Verbinden von zwei Bauauf Seite 7 elementen zur Herstellung einer fluiddichten Einheit die folgenden Schritte aufversetzen weisen:
- Bereitstellen zumindest eines ersten Bauelementes, das einseitig lotplattiert ist, wobei das erste Bauelement einen Schneidgrat auf einer der lotplattierten Oberfläche abgewandten Seite aufweist; und
- Fluiddichtes Verbinden, insbesondere Verlöten, des ersten Bauelementes mit einem zweiten Bauelement, um die fluiddichte Einheit herzustellen, wobei beim fluiddichten Verbinden des ersten und zweiten Bauelementes die lotplattierte Oberfläche des ersten Bauelementes dem zweiten Bauelement zugewandt ist.

Eine derartige Ausführungsform der Erfindung basiert auf der Erkenntnis, dass ein Bauelement lediglich einseitig lotplattiert werden braucht und derart geschnitten werden kann, dass ein verbleibender Grat auf der der nichtlotplattierten Seite zurück bleibt. Dieser Grat behindert dann nicht mehr die Lötverbindung, so dass eine fluiddichte Verbindung zwischen den beiden Bauelementen hergestellt werden kann. Der Vorteil einer derartigen Ausführungsform der Erfindung basiert darin, dass durch eine günstige Vorverarbeitung auf ein Entgraten des ersten Bauelements verzichtet werden kann. Dieses Vermeiden eines Arbeitsschritts wirkt sich kostensparend aus. Ferner kann vermieden werden, dass ein Lot in der aufgebrachten Lotplattierung durch das Entgraten entfernt wird, so dass eventuell für das Verbinden nicht mehr ausreichend Lot vorhanden ist.

Auch können vorteilhafterweise unterschiedliche der vorstehend beschriebenen Ansätze kombiniert werden. In einer solchen Ausführungsform der Erfindung kann das Verfahren zum fluiddichte Verbinden von zwei Bauelemente zur Herstellung einer fluiddichte Einheit Schritte gemäß einem ersten der vorstehend genannten Ansätze und ferner zumindest einen anderen Schritt gemäß anderen der vorstehend genannten Ansätze aufweisen. Beispielsweise kann ein erstes Bauelement verwendet werden, das eine einseitige Lotplattierung aufweist und einen Schneidgrat auf einer der Lotplattierung gegenüberliegenden Seite aufweist und zugleich ein zweites Bauelement verwenden, das einen Schneidgrat auf einem Überstand aufweist, so dass durch beide Schneidgrate kein ungewünschter Abstand zwischen dem ersten und zweiten Bauelement bei der Verlötung bewirkt wird.

Besonders günstig ist es, wenn eine Kühlungseinheit für eine Energiespeicherzelle durch Ausführung der Schritte eines vorstehend beschriebenen Verfahrens gemäß hergestellt wird. In diesem Fall kann die Kühlungseinheit, die zumindest eine fluiddichte Verbindung aufweist, kostengünstig und konstruktiv einfach hergestellt werden und weist zudem eine zuverlässige Dichtheit der fluiddichten Verbindung auf.

Die vorstehend vorgeschlagenen Ansätze / Vorschläge erhöhen die Wahrscheinlichkeit einer mangelfreien Verlötung oder bieten unter anderem wirtschaftliche Vorteile bei der Vorbereitung oder Herstellung der Einzelteile sowie beim fertig verlöteten Teil. Bei der Herstellung der fluiddichte Einheit brauchten daher Grate nicht mehr entfernt werden. Ferner können auch Kanalverschlüsse durch Lotüberschuss vermieden werden.

Günstige Ausführungsbeispiele der vorliegenden Erfindung werden nachfolgend Bezug nehmend auf die beiliegenden Zeichnungen näher erläutert. Es zeigen:
- Fig. 1: eine Schnittdarstellung eines Ausschnitts einer fluiddichte Einheit, die ohne die Verwendung eines ersten Ausführungsbeispiels der vorliegenden Erfindung hergestellt wurde;
- Fig. 2: eine Schnittdarstellung eines Ausschnitts einer fluiddichten Einheit, die unter Verwerdung des ersten und eines zweiten Ausführungsbeispiels der vorliegenden Erfindung hergestellt wurde;
- Fig. 3: eine Schnittdarstellung eines Ausschnitts einer fluiddichten Einheit, die unter Verwendung eines weiteren Ausführungsbeispiels der vorliegenden Erfindung hergestellt wurde:
- Fig. 4: eine Schnittdarstellung eines Ausschnitts einer fluiddichten Einheit, die unter Verwendung eines weiteren Ausführungsbeispiels der vorliegenden Erfindung hergestellt wurde;
- Fig. 5: eine Schnittdarstellung eines Ausschnitts einer fluiddichten Einheit, die unter Verwendung eines weiteren Ausführungsbeispiels der vorliegenden Erfindung hergestellt wurde;
- Fig. 6: ein Ablaufdiagramm eines weiteren Ausführungsbeispiels der vorliegenden Erfindung als Verfahren;
- Fig.7: ein Ablaufdiagramm eines weiteren Ausführungsbeispiels der vorliegenden Erfindung als Verfahren;
- Fig. 8: ein Ablaufdiagramm eines weiteren Ausführungsbeispiels der vorliegenden Erfindung als Verfahren;
- Fig. 9: ein Ablaufdiagramm eines weiteren Ausführungsbeispiels der vorliegenden Erfindung als Verfahren; und
- Fig. 10: ein Ablaufdiagramm eines weiteren Ausführungsbeispiels der vorliegenden Erfindung als Verfahren.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei auf eine wiederholte Beschreibung dieser Elemente verzichtet wird. Ferner enthalten die Figuren der Zeichnungen, deren Beschreibung sowie die Ansprüche zahlreiche Merkmale in Kombination. Einen Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung unter Verwendung von unterschiedlichen Maßen und Dimensionen erläutert, wobei die Erfindung nicht auf diese Maße und Dimensionen eingeschränkt zu verstehen ist. Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

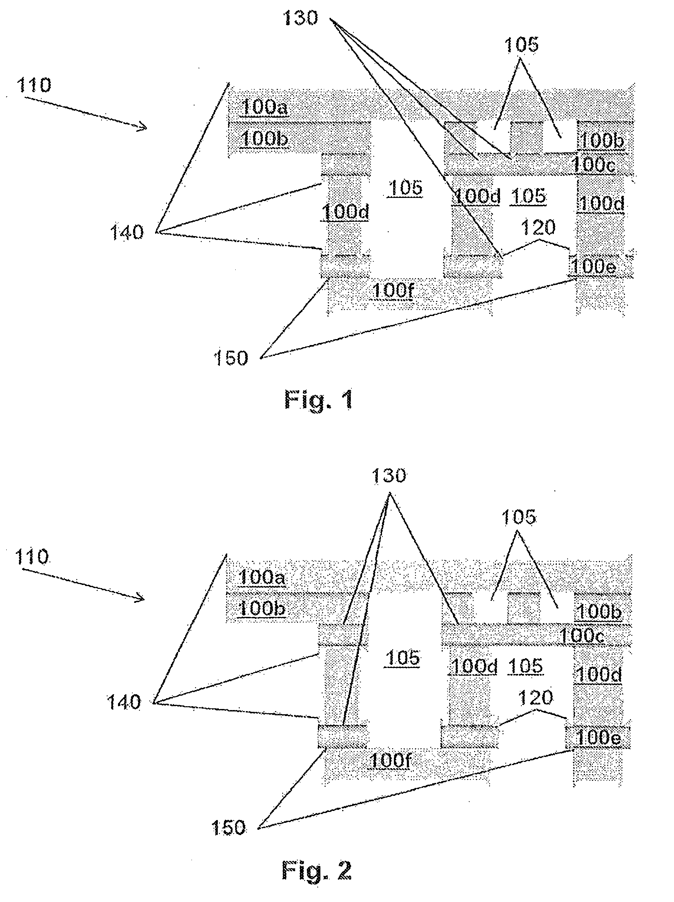

Fig. 1 zeigt eine Schnittdarstellung eines Ausschnitts einer fluiddichten Einheit, die ohne die Verwendung eines Ausführungsbeispiels der vorliegenden Erfindung hergestellt wurde. Hierbei wurden einseitig lotplattierte Bleche als erstes Bauelement mit Schneidgraten auf der unplattierten Seite verwendet. In Fig. 1 sind dabei exemplarisch einzelne Bleche 100 a-f abgebildet, die horizontal ausgerichtet und mit Öffnungen 105 versehen sind und die die miteinander zur fluiddichten Einheit 110 verbunden sind. Unter einer fluiddichte Einheit 110 wird dabei eine Einheit verstanden, bei der Verbindungsstellen zwischen einzelnen Bauelementen (d.h. hier den Blechen 100) undurchlässig gegenüber einem Fluid (beispielsweise einem Gas oder einer Flüssigkeit) sind. Vor einer Verbindung der einzelnen Bleche 100 zu der fluiddichten Einheit 110 müssen diese Bleche jedoch meist auf die entsprechend benötigten Abmessungen zugeschnitten werden. Bei einem solchen Zuschnitt, der beispielsweise durch eine Blechschere ausgeführt wird, entstehen jedoch Schneidgrate 120, die von einer (Haupt-) Oberfläche der entsprechenden Bleche 100 abstehen. Um eine möglichst einfache Aufbringung von Lotmittel auf die Lötstellen durchzuführen, können für den Zuschnitt Bleche verwendet werden, die bereits auf einer Seite eine Lotplattierung aufweisen. Hierdurch kann ein Arbeitsschritt des Aufbringens von Lotmittel an den entsprechenden Kontaktbereichen an einem der zu verbindenden Bauelemente vermieden werden, wodurch sich Herstellungskosten für die Herstellung der fluiddichten Einheit reduzieren lassen.

Es wird gemäß einer ersten Ausführungsform der Erfindung vorgeschlagen möglichst einseitig lotplattierte Bleche zu verwenden. Dadurch ist es bei nahezu allen mechanischen Schneidprozessen möglich, den Schneid-Prozess so zu wählen, dass der Schneidgrat 120 auf der unplattierten Seite zu liegen kommt. Auf diese Weise ist eine flächige d.h. wirtschaftliche mechanische Gratentfernung auf der unplattierten Seite des Bleches möglich. Diese wird häufig auch zur Entfernung von Oxiden nach längerer Lagerzeit eingesetzt. Erfolgt keine Entfernung der Grate 120, können diese Grate bei einem Zusammenfügen der Bleche, beispielsweise die Bleche 100b und 100c in Fig. 1) einen Abstand an der Verbindungsstelle bewirken, was zu einer schlechten oder fehlerhaften Verbindung/Verlötung führt. Wird nun jedoch die vorliegende Erfindung gemäß einer Ausführungsform verwendet, kann vor dem Verbinden des Bleches 100b mit dem weiteren Blech 100c eine flächige Entfernung 130 der Schneidgrate 120 des Bleches 100b auf einer Hauptoberfläche erfolgen, die dem weiteren Blech 100c zugewandt ist (siehe Fig. 2). Wenn nun auf dieser Hauptoberfläche des Bleches 100b, an dem die Grate 120 entfernt werden, keine Lotplattierung aufgebracht ist, besteht auch keine Gefahr, dass durch das Entfernen der Schneidgrate 120 das Lotmittel entfernt wird. Eine unsichere Verbindung zwischen den Blechen 100b und 100c ist dann nicht zu befürchten. In diesem Fall sollte eine Lotplattierung auf einer Hauptoberfläche des weiteren Bleches 100c angeordnet sein, um die Verbindungsstelle mit einer ausreichenden Lotmittelmenge für die Verlötung zu versorgen. Zusammenfassend kann zum ersten Ausführungsbeispiel angemerkt werden, dass bei einseitig lotplattierten Teilen der/die Schneidgrat(e) 120 möglichst auf die unplattierte Seite des Bauelementes gelegt werden sollten, so dass Schneidgrate dann leichter und somit kostengünstiger flächig entfernt werden können; andernfalls wird evtl. Lot mit entfernt.

Ein weiterer Ansatz, die Schneidgrate 120 aus einem Verbindungsbereich zwischen den einzelnen Blechen 100 herauszuhalten kann gemäß einem anderen Ausführungsbeispiel der Erfindung darin bestehen, einen Konturüberstand 140 bei einem der Bleche vorzusehen, von dem die Schneidgrate 120 abstehen.

Dies ist aus der Schnittdarstellung gemäß Fig. 2 ebenfalls ersichtlich. Die Schneidgrate 120 laufen somit ins Leere und stören einen Verbindungsbereich zwischen den einzelnen Blechen 100 nicht mehr. Es wird somit gemäß einem zweiten Ausführungsbeispiel vorgeschlagen in einer Blechschicht (z.B. der Blechschicht 100c) einen Überstand 140 der Schneidkonturen 120 zur darüber bzw. darunter liegenden Blechschicht 100b bzw. 100d, bevorzugt im Bereich von 0,5 bis 3 mm, anzuwenden. In dem dadurch überall entstehenden 90 Grad Winkel zwischen den verschiedenen Blechen 100 (beispielsweise an den Stellen 150) kann sich durch die verbesserten Kapillarkräfte ein definierter Lotmeniskus ausbilden. Ein eventuell vorhandener Schneidgrat 120 muss nicht entfernt werden, da er "ins Leere" läuft. Dadurch ergibt sich ein Kostenvorteil. Muss konstruktionsbedingt ein beidseitig lotplattiertes Blech verwendet werden ist dies besonders vorteilhaft, da hier zwangsläufig entstehende Grate nicht flächig entfernt werden können, da sonst die Lotschichten mit abgetragen werden. Eine selektive Gratentfernung ist daher erforderlich und dementsprechend teuer.

Fig. 2 zeigt eine Schnittdarstellung eines Ausschnitts einer fluiddichten Einheit, die unter anderem unter Verwendung des zweiten Ausführungsbeispiels der vorliegenden Erfindung hergestellt wurde. Hier wurde eine flächige Entfernung 130 von Schneidgraten 120 in einer der Blechschichten (Blechschicht 100b) vor der Verlötung der Blechschichten vorgenommen, so dass die Schneidgrate 120 nicht schädlich bei der Ausbildung der Lötstellen wirken können.

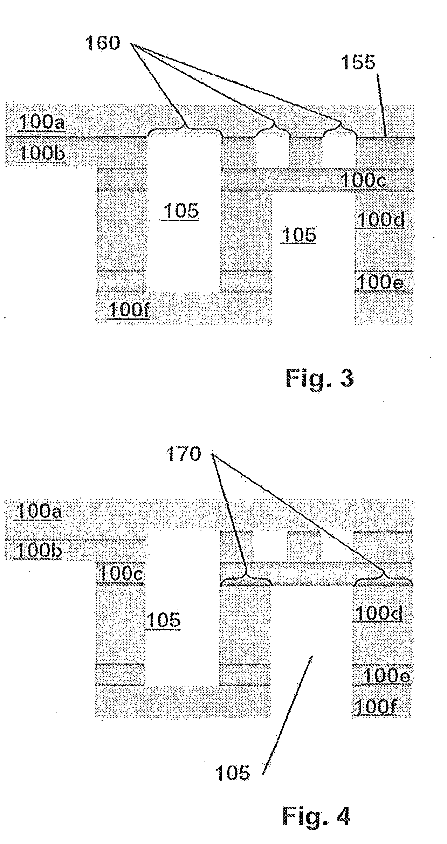

In Fig. 3 ist eine Schnittdarstellung eines Ausschnitts einer fluiddichten Einheit dargestellt, die unter Verwendung eines weiteren Ausführungsbeispiels der vorliegenden Erfindung hergestellt wurde. Bei einem derartigen Ausführungsbeispiel kann das Lot mit der Kanalstruktur ausgeschnitten werden. Insbesondere kann das Lot, das in Form einer Lotplattierung 155 an einer (Haupt-) Oberfläche eines Bauelementes (beispielsweise des Bleches 100a) angebracht ist, in denjenigen Bereichen 160 entfernt werden (d.h. die Lotplattierung wird in diesen Stellen geöffnet oder entfernt), in denen ein Gegenpart (hier das Blech 100b) eine Öffnung 105 oder eine Ausnehmung aufweist, um beim Zusammenfügen der beiden Bauelemente einen Fluidkanal in der herzustellenden fluiddichten Einheit 110 auszubilden. Es wird somit weiterhin vorgeschlagen, das Lot bereits vor der eigentlichen Verlötung der einzelnen Bleche 100 mit den auszubildenden Kanälen 105 auszuschneiden. Dadurch wird speziell in den Kanälen überschüssiges Lot und damit unerwünschte Kanalverengungen bzw. Kanalverschlüsse vermieden.

Ein weiteres Ausführungsbeispiel ist in Fig. 4 dargestellt, die eine Schnittdarstellung eines Ausschnitts einer fluiddichten Einheit wiedergibt, die unter Verwendung eines weiteren Ausführungsbeispiels der vorliegenden Erfindung hergestellt wurde. Gemäß diesem Ausführungsbeispiel wird eine flächige Verlötung an Kontaktstellen 170 vermieden, an denen zwei zu verbindende Bauelemente (beispielsweise das Blech 100c und 100d) miteinander durch die Verlötung (als Verbindungstechnik) stoffschlüssig miteinander verbunden werden. Dadurch, dass gemäß diesem Ausführungsbeispiel vorgeschlagen wird, flächige Verlötungsbereiche bevorzugt im Bereich breiter als 10 mm zu vermeiden, wird verhindert, dass bei der Verlötung Verunreinigungen nicht entgasen können. Dies könnte teilweise zu mangelhafter Verlötung führen. Weiterhin ist durch die Schaffung von Hohlräumen bzw. Ausschneiden von Material an Stellen wo es nicht benötigt wird eine erhebliche Gewichtseinsparung möglich.

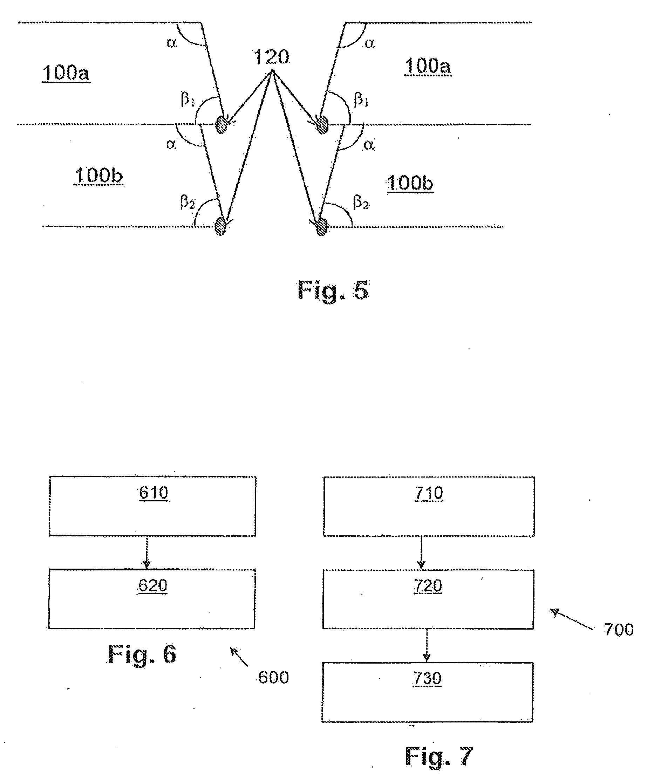

Fig. 5 zeigt eine Schnittdarstellung eines Ausschnitts einer fluiddichten Einheit, die unter Verwendung eines weiteren Ausführungsbeispiels der vorliegenden Erfindung hergestellt wurde. Hierbei wurden Öffnungen (oder zumindest Seitenkanten der Bauelemente) in verschiedenen Bauelementen 100a bzw. 100b durch ein "konische Stanzen" erreicht. Das Zusammenfügen der einzelnen Bleche 100a und 100b erfolgt derart, dass die Grate 120 der übereinander liegenden Schichtbleche 100a und 100b "ins Leere laufen". Somit kann eine verbesserte Verlötung der einzelnen Schichtbleche 100a und 100b sichergestellt werden, da die Grate 120 nicht direkt übereinanderliegen.

Die beschriebenen Ausführungsbeispiele sind nur beispielhaft gewählt und können miteinander kombiniert werden, wie ein Fachmann unschwer erkennen kann.

Gemäß einem weiteren Ausführungsbeispiel der vorliegenden Erfindung wird ein Verfahren 600 zum fluiddichten Verbinden von zwei Bauelementen zur Herstellung einer fluiddichten Einheit vorgeschlagen, wie es in dem Ablaufdiagramm gemäß Fig. 6 wiedergegeben ist. Dabei umfasst das Verfahren 600 einen ersten Schritt des Bereitstellens 610 zumindest eines ersten Bauelementes, das einseitig lotplattiert ist, wobei das erste Bauelement einen Schneidgrat auf einer der lotplattierten Oberfläche abgewandten Seite aufweist. Weiterhin umfasst das Verfahren einen weiteren Schritt des fluiddichten Verbindens (620), insbesondere Verlötens, des ersten Bauelementes mit einem zweiten Bauelement, um die fluiddichte Einheit herzustellen, wobei beim fluiddichten Verbinden des ersten und zweiten Bauelementes die lotplattierte Oberfläche des ersten Bauelementes dem zweiten Bauelement zugewandt ist.

In Fig. 7 ist ein Ablaufdiagramm eines weiteren Ausführungsbeispiels der vorliegenden Erfindung als Verfahren 700 zum fluiddichten Verbinden von zwei Bauelementen zur Herstellung einer fluiddichten Einheit dargestellt. Ein solches Verfahren 700 umfasst einen Schritt des Bereitstellens 710 zumindest eines ersten Bauelementes, das einen Schneidgrat auf einer Hauptoberfläche aufweist. Ferner umfasst das Verfahren 700 einen weiteren Schritt des Zusammenfügens 720 des ersten Bauelementes mit zumindest einem zweiten Bauelement, wobei das Zusammenfügen derart erfolgt, dass eine Hauptoberfläche des zweiten Bauelementes die Hauptoberfläche des ersten Bauelementes kontaktiert und der Schneidgrat um zumindest einen vorbestimmten Abstand von einer Seitenoberfläche des zweiten Bauelementes angeordnet ist. Schließlich umfasst das Verfahren einen weiteren Schritt des fluiddichten Verbindens 730, insbesondere des Verlötens des ersten und zweiten Bauelementes, um die fluiddichte Einheit herzustellen.

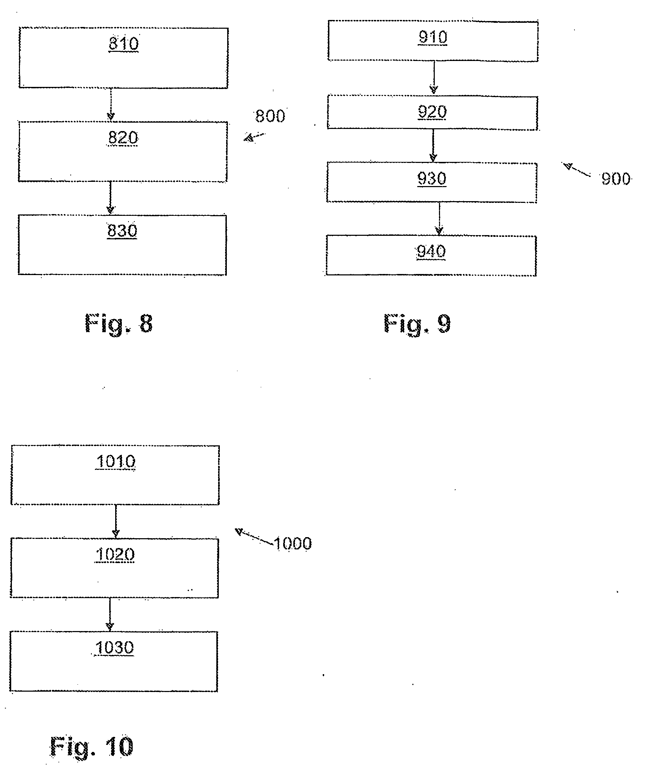

Fig. 8 zeigt ein Ablaufdiagramm eines weiteren Ausführungsbeispiels der vorliegenden Erfindung als Verfahren 800 zum fluiddichten Verbinden von zwei Bauelementen zur Herstellung einer fluiddichten Einheit. Das Verfahren 800 umfasst einen Schritt des Bereitstellens 810 eines ersten Bauelementes mit einem konischen Seitenschnitt, wobei das erste Bauelement einen Schneidgrat aufweist, der von derjenigen Hauptoberfläche des ersten Bauelementes absteht, die einen kleineren Winkel zum Seitenschnitt aufweist. Ein Seitenschnitt kann in der vorliegenden Beschreibung auch als seitliche (Schnitt-) Kante oder Kante einer Öffnung des Bauelementes aufgefasst werden. Ferner umfasst das Verfahren 800 einen weiteren Schritt des Bereitstellens 820 eines zweiten Bauelementes mit einem konischen Seitenschnitt, wobei das zweite Bauelement einen Schneidgrat aufweist, der von derjenigen Hauptoberfläche des zweiten Bauelementes absteht, die einen kleineren Winkel zum Seitenschnitt aufweist. Schließlich umfasst das Verfahren 800 einen dritten Schritt des fluiddichten Verbindens 830 des ersten Bauelementes mit dem zweiten Bauelement, um die fluiddichte Einheit herzustellen, wobei der Schneidgrat des ersten Bauelementes im Wesentlichen mit dem Schneidgrat des zweiten Bauelementes ausgerichtet ist und der Schneidgrat des zweiten Bauelementes an der von dem ersten Bauelement abgewandten Hauptoberfläche des zweiten Bauelementes angeordnet ist.

In Fig. 9 ist ein Ablaufdiagramm eines weiteren Ausführungsbeispiels der vorliegenden Erfindung als Verfahren 900 zum fluiddichten Verbinden von zwei Bauelementen zur Herstellung einer fluiddichten Einheit dargestellt. Dabei umfasst das Verfahren 900 einen Schritt des Bereitstellens 910 zumindest eines ersten Bauelementes, das zumindest eine Ausnehmung oder Öffnung aufweist. Ferner umfasst das Verfahren 900 einen Schritt des Bereitstellens 920 zumindest eines zweiten Bauelementes, das zumindest einseitig eine Lotplattierung aufweist, wobei die Lotplattierung in zumindest einem Bereich eine Plattierungsöffnung aufweist. Als Plattierungsöffnung kann dabei ein Bereich auf der Oberfläche des zweiten Bauelementes verstanden werden, an dem die Lotplattierung entfernt wurde. Ferner umfasst das Verfahren 900 einen Schritt des Zusammenfügens 930 des ersten Bauelementes mit einem zweiten Bauelement, wobei die Ausnehmung oder Öffnung des ersten Bauelementes mit der Plattierungsöffnung des zweiten Bauelementes ausgerichtet ist. Schließlich umfasst das Verfahren 900 einen Schritt des fluiddichte Verbindens 940, insbesondere des Verlötens, des ersten Bauelementes mit dem zweiten Bauelements, um die fluiddichte Einheit herzustellen.

in Fig. 10 ist ein Ablaufdiagramm eines weiteren Ausführungsbeispiels der vorliegenden Erfindung als Verfahren 1000 zum fluiddichte Verbinden von zwei Bauelementen zur Herstellung einer fluiddichte Einheit dargestellt. Das Verfahren 1000 umfasst dabei einen Schritt des Bereitstellens 1010 zumindest eines ersten Bauelemente und einen Schritt des Bereitstellens 1020 eines zweiten Bauelementes das zumindest eine Ausnehmung oder Öffnung aufweist, wobei die Ausnehmung oder Öffnung eine Größe hat, so dass ein Kontaktbereich zwischen dem ersten und dem zweiten Bauelemente höchstens eine Ausdehnung von 10 mm aufweiset. Schließlich umfasst das Verfahren 1000 einen weiteren Schritt des fluiddichte Verbindens 1030, insbesondere des Verlötens des ersten und zweiten Bauelementes, um die fluiddichte Einheit herzustellen, wobei beim Verbinden das erste Bauelemente in dem Kontaktbereich stoffschlüssig mit dem zweiten Bauelemente verbunden ist und in einem Bereich der Ausnehmung das erste Bauelemente mit dem zweiten Bauelemente nicht stoffschlüssig verbunden ist.

## Patentansprüche

1. Verfahren (700) zum fluiddichten Verbinden von zwei Bauelementen (100d, 100e) zur Herstellung einer fluiddichten Einheit (110), wobei das Verfahren (700) die folgenden Schritte aufweist:
- Bereitstellen (710) zumindest eines ersten Bauelementes (100e), das einen Schneidgrat (120) auf einer Hauptoberfläche aufweist;
- Zusammenfügen (720) des ersten Bauelementes (100e) mit zumindest einem zweiten Bauelement (100d), wobei das Zusammenfügen derart erfolgt, dass eine Hauptoberfläche des zweiten Bauelementes (100d) die Hauptoberfläche des ersten Bauelementes (100e) kontaktiert und der Schneidgrat (120) um zumindest einen vorbestimmten Abstand (140) von einer Seitenfläche des zweiten Bauelementes (100d) angeordnet ist; und
- Fluiddichtes Verbinden (730), insbesondere Verlöten des ersten und zweiten Bauelementes (100e, 100d), um die fluiddichte Einheit (110) herzustellen.

2. Verfahren (700) gemäß Anspruch 1, **dadurch gekennzeichnet, dass** im Schritt des Zusammenfügens (720) der Schneidgrat (120) auf der Hauptoberfläche des ersten Bauelementes (100e) in einem Abstand von 0,5 mm bis 3 mm von der Seitenfläche des zweiten Bauelementes(100d) angeordnet wird.

3. Verfahren (700) gemäß einem der Ansprüche 1 oder 2, dadurch gekennzeichnen, dass der Schritt des Zusammenfügens (720) derart ausgefügt wird, dass die Seitenfläche des zweiten Bauelementes (100d) mit der Hauptoberfläche des ersten Bauelementes (100e) oder einer Hauptoberfläche eines weiteren Bauelementes (100f) im Wesentlichen einen Winkel vorn 90° bildet.

4. Verfahren (800) zum fluiddichten Verbinden von zwei Bauelementen (100a, 100b) zur Herstellung einer fluiddichten Einheit (110), wobei das Verfahren (800) die folgenden Schritte aufweist:
- Bereitstellens (810) eines ersten Bauelementes (100a) mit einem konischen Seitenschnitt, wobei das erste Bauelement (100a) einen Schneidgrat (120) aufweist, der von derjenigen Hauptoberfläche des ersten Bauelementes (100a) absteht, die einen kleineren Winkel (β₁) zum Seitenschnitt aufweist,
- Bereitstellen (820) eines zweiten Bauelementes (100b) mit einem konischen Seiterischnitt; wobei das zweite Bauelement (100b) einen Schneidgrat (120) aufweist, der von derjenigen Hauptoberfläche des zweiten Bauelementes (100b) absteht, die einen kleineren Winkel (β₂) zum Seitenschnitt aufweist; und
- Fluiddichtes Verbinden (830) des ersten Bauelementes (100a) mit dem zweiten Bauelement, (100b), um die fluiddichte Einheit (110) herzustellen, wobei der Schneidgrat (120) des ersten Bauelementes (100a) im Wesentlichen mit dem Schneidgrat (120) des zweiten Bauelementes (100b) ausgerichtet ist und der Schneidgrat (120) des zweiten Bauelementes (100b) an der von dem ersten Bauelement (100a) abgewandten Hauptoberfläche des zweiten Bauelementes (100b) angeordnet ist.

5. Verfahren (900) zum fluiddichten Verbinden von zwei Bauelementen (100a, 100b) zur Herstellung einer fluiddichten Einheit (110) nach einem der vorhergehenden Ansprüche, wobei das Verfahren (900) weiterhin die folgenden Schritte aufweist:
- Bereitstellen (910) zumindest eines, ersten Bauelementes (100b), das zumindest eine Ausnehmung oder Öffnung (105) aufweist;
- Bereitstellen (920) zumindest eines zweiten Bauelementes (100a), das zumindest einseitig eine Lotplattierung aufweist, wobei die Lotplattierung in zumindest einem Bereich eine Plattierungsöffnung (160) aufweist;
- Zusammenfügen (930) des ersten Bauelementes (100b) mit dem zweiten Bauelement (100a), wobei die Ausnehmung oder Öffnung (105) des ersten Bauelementes (100b) mit der Plattierungsöffnung (160) des zweiten Bauelements (100a) ausgerichtet ist; und
- Fluiddichtes Verbinden (940), insbesondere Verlöten, des ersten Bauelementes (100b) mit dem zweiten Bauelement (100a), um die fluiddichte Einheit (110) herzustellen.

6. Verfahren (1000) zum fluiddichten Verbinden von zwei Bauelementen (100c, 100d) zur Herstellung einer fluiddichten Einheit (110) nach einem der vorhergehenden Ansprüche, wobei das Verfahren (1000) weiterhin die fotgenden Schritte aufweist:
- Bereitstellen (1010) zumindest eines ersten Bauelementes (100c);
- Bereitstellen (1020) eines zweiten Bauelementes (100d) das zumindest eine Ausnehmung oder Öffnung (105) aufweist, wobei die Ausnehmung oder Öffnung (105) eine Größe hat, so dass ein Kontaktbereich(170) zwischen dem ersten (100c) und dem zweiten (100d) Bauelement höchstens eine Ausdehnung von 10 mm aufweist; und
- Fluiddichtes Verbinden (1030), insbesondere Verlöten des ersten (100c) und zweiten (100d) Bauelementes, um die fluiddichte Einheit (110) herzustellen, wobei beim Verbinden das erste Bauelement (100c) in dem Kontaktbereich (170) stoffschlüssig mit dem zweiten Bauelement (100d) verbunden wird und in einem Bereich der Ausnehmung oder Öffnung (105) das erste Bauelement (100c) mit dem zweiten Bauelement (100d) nicht stoffschlüssig verbunden wird.

7. Verfahren (600) zum fluiddichten Verbinden von zwei Bauelementen (100c, 100b) zur Herstellung einer fluiddichten Einheit (110) nach einem der vorhergehenden Ansprüche, wobei das Verfahren (600) weiterhin die folgenden Schritte aufweist:
Bereitstellens (610) zumindest eines ersten Bauelementes (100c), das einseitig lotplattiert ist, wobei das erste Bauelement (100b) einen Schneidgrat (120) auf einer der lotplattierten Oberfläche abgewandten Seite aufweist; und
- Fluiddichtes Verbinden (620), insbesondere Verlöten, des ersten Bauelementes (100c) mit einem zweiten Bauelement (100b) um die fluiddichte Einheit (110) herzustellen, wobei beim fluiddichten Verbinden des ersten (100c) und zweiten (100b) Bauelementes die lotplattierte Oberfläche des ersten Bauelementes (100c) dem zweiten Bauelement, (100b) zugewandt ist.

## Claims

1. A method (700) for the fluid-tight connection of two components (100d, 100e) for producing a fluid-tight unit (110), whereby the method (700) comprises the following steps:
- provision (710) of at least one first component (100e), which has a cutting burr (120) on a main surface;
- joining (720) of the first component (100e) to at least one second component (100d), whereby the joining occurs in such a way that a main surface of the second component (100d) is in contact with the main surface of the first component (100e) and the cutting burr (120) is arranged by at least a predefined distance (140) from a side surface of the second component (100d); and
- fluid-tight connection (730), particularly soldering of the first and second components (100e, 100d) to produce the fluid-tight unit (110).

2. The method (700) according to claim 1, **characterised in that** in the step of joining (720) the cutting burr (120) is arranged on the main surface of the first component (100e) at a distance of 0.5 mm to 3 mm from the side surface of the second component (100d).

3. The method (700) according to either claim 1 or 2, **characterised in that** the step of joining (720) is carried out in such a way that the side surface of the second component (100d) substantially forms an angle of 90° with the main surface of the first component (100e) or a main surface of another component (100f).

4. A method (800) for the fluid-tight connection of two components (100a, 100b) for producing a fluid-tight unit (110), whereby the method (800) comprises the following steps:
- provision (810) of a first component (100a) with a conical side cut, whereby the first component (100a) has a cutting burr (120), which projects from the main surface of the first component (100a) that has a smaller angle (β₁) to the side cut;
- provision (820) of a second component (100b) with a conical side cut, whereby the second component (100b) has a cutting burr (120), which projects from the main surface of the second component (100b) that has a smaller angle (β₂) to the side cut; and
- fluid-tight connection (830) of the first component (100a) to the second component (100b) to produce the fluid-tight unit (110), whereby the cutting burr (120) of the first component (100a) is aligned substantially with the cutting burr (120) of the second component (100b) and the cutting burr (120) of the second component (100b) is arranged on the main surface of the second component (100b), said surface facing away from the first component (100a).

5. A method (900) for the fluid-tight connection of two components (100a, 100b) for producing a fluid-tight unit (110) according to one of the preceding claims, whereby the method (900) further comprises the following steps:
- provision (910) of at least one first component (100b), which has at least one recess or opening (105);
- provision (920) of at least one second component (100a), which has solder plating at least on one side, whereby the solder plating has a plating opening (160) in at least one area;
- joining (930) of the first component (100b) to the second component (100a), whereby the recess or opening (105) of the first component (100b) is aligned with the plating opening (160) of the second component (100a); and
- fluid-tight connection (940), particularly soldering, of the first component (100b) to the second component (100a) to produce the fluid-tight unit (110).

6. A method (1000) for the fluid-tight connection of two components (100c, 100d) for producing a fluid-tight unit (110) according to one of the preceding claims, whereby the method (1000) further comprises the following steps:
- provision (1010) of at least one first component (100c);
- provision (1020) of a second component (100d) which has at least one recess or opening (105), whereby the recess or opening (105) is sized so that a contact area (170) between the first (100c) and second (100d) components has at most a dimension of 10 mm; and
- fluid-tight connection (1030), particularly soldering of the first (100c) and second (100d) components to produce the fluid-tight unit (110), whereby in the connection the first component (100c) is connected in the contact area (170) in a bonding manner to the second component (100d) and in an area of the recess or opening (105) the first component (100c) is not connected in a bonding manner to the second component (100d).

7. A method (600) for the fluid-tight connection of two components (100c, 100b) for producing a fluid-tight unit (110) according to one of the preceding claims, whereby the method (600) further comprises the following steps:
- provision (610) of at least one first component (100c) that is solder-plated on one side, whereby the first component (100b) has a cutting burr (120) on a side facing away from the solder-plated surface; and
- fluid-tight connection (620), particularly soldering, of the first component (100c) to a second component (100b) to produce the fluid-tight unit (110), whereby in the fluid-tight connection of the first (100c) and second (100b) components the solder-plated surface of the first component (100c) faces the second component (100b).

## Revendications

1. Procédé (700) pour la liaison, étanche aux fluides, de deux éléments de construction (100d, 100e), pour la fabrication d'une unité (110) étanche aux fluides, où le procédé (700) comprend les étapes suivantes :
- la mise à disposition (710) d'au moins un premier élément de construction (100e) qui présente une bavure de coupe (120) située sur une surface principale ;
- l'assemblage (720) du premier élément de construction (100e) avec au moins un deuxième élément de construction (100d), où l'assemblage est réalisé de manière telle, qu'une surface principale du deuxième élément de construction (100d) soit au contact de la surface principale du premier élément de construction (100e) et que la bavure de coupe (120) soit disposée au moins à une distance prédéterminée (140) par rapport à une surface latérale du deuxième élément de construction (100d) ; et
- la liaison (730) étanche aux fluides, en particulier l'assemblage par brasage du premier et du deuxième élément de construction (100e, 100d), pour fabriquer l'unité (110) étanche aux fluides.

2. Procédé (700) selon la revendication 1, **caractérisé en ce que**, au cours de l'étape de l'assemblage (720), la bavure de coupe (120) est disposée sur la surface principale du premier élément de construction (100e), à une distance de 0,5 mm à 3 mm par rapport à la surface latérale du deuxième élément de construction (100d).

3. Procédé (700) selon l'une des revendications 1 ou 2, **caractérisé en ce que** l'assemblage (720), lors de son étape de réalisation, est jointoyé de manière telle, que la surface latérale du deuxième élément de construction (100d) forme un angle pratiquement de 90° avec la surface principale du premier élément de construction (100e) ou avec une surface principale d'un autre élément de construction (100f).

4. Procédé (800) pour la liaison, étanche aux fluides, de deux éléments de construction (100a, 100b), pour la fabrication d'une unité (110) étanche aux fluides, où le procédé (800) présente les étapes suivantes :
- la mise à disposition (810) d'un premier élément de construction (100a) ayant une coupe latérale conique, où le premier élément de construction (100a) présente une bavure de coupe (120) qui est en saillie par rapport à la surface principale du premier élément de construction (100a), laquelle surface principale présente un angle (β₁) plus petit par rapport à la coupe latérale ;
- la mise à disposition (820) d'un deuxième élément de construction (100b) ayant une coupe latérale conique, où le deuxième élément de construction (100b) présente une bavure de coupe (120) qui est en saillie par rapport à la surface principale du deuxième élément de construction (100b), laquelle surface principale présente un angle (β₂) plus petit par rapport à la coupe latérale ; et
- la liaison (830), étanche aux fluides, du premier élément de construction (100a) avec le deuxième élément de construction (100b), pour fabriquer l'unité (110) étanche aux fluides, où la bavure de coupe (120) du premier élément de construction (100a) est pratiquement alignée sur la bavure de coupe (120) du deuxième élément de construction (100b), et la bavure de coupe (120) du deuxième élément de construction (100b) est disposée sur la surface principale du deuxième élément de construction (100b), ladite surface principale étant placée à l'opposé du premier élément de construction (100a).

5. Procédé (900) pour la liaison, étanche aux fluides, de deux éléments de construction (100a, 100b), pour la fabrication d'une unité (110) étanche aux fluides selon l'une quelconque des revendications précédentes, où le procédé (900) présente en outre les étapes suivantes :
- la mise à disposition (910) d'au moins un premier élément de construction (100b) qui présente au moins une partie en creux ou ouverture (105) ;
- la mise à disposition (920) d'au moins un deuxième élément de construction (100a) qui présente au moins, sur un côté, un placage par brasage, où le placage par brasage présente, dans au moins une zone, une ouverture de placage (160) ;
- l'assemblage (930) du premier élément de construction (100b) avec le deuxième élément de construction (100a), où la partie en creux ou ouverture (105) du premier élément de construction (100b) est alignée sur l'ouverture de placage (160) du deuxième élément de construction (100a) ; et
- la liaison (940) étanche aux fluides, en particulier l'assemblage par brasage du premier élément de construction (100b) avec le deuxième élément de construction (100a), pour fabriquer l'unité (110) étanche aux fluides.

6. Procédé (1000) pour la liaison, étanche aux fluides, de deux éléments de construction (100c, 100d), pour la fabrication d'une unité (110) étanche aux fluides selon l'une quelconque des revendications précédentes, où le procédé (1000) présente en outre les étapes suivantes :
- la mise à disposition (1010) d'au moins un premier élément de construction (100c) ;
- la mise à disposition (1020) d'un deuxième élément de construction (100d) qui présente au moins une partie en creux ou ouverture (105), où la partie en creux ou ouverture (105) a une dimension telle, qu'une zone de contact (170) présente, entre le premier (100c) et le deuxième (100d) élément de construction, une étendue au maximum de 10 mm ; et
- la liaison (1030) étanche aux fluides, en particulier l'assemblage par brasage du premier (100c) et du deuxième (100d) élément de construction, pour fabriquer l'unité (110) étanche aux fluides où, lors de l'assemblage, le premier élément de construction (100c) est relié au deuxième élément de construction (100d) par continuité de matière, dans la zone de contact (170), et, dans une zone de la partie en creux ou ouverture (105), le premier élément de construction (100c) n'est pas relié au deuxième élément de construction (100d) par continuité de matière.

7. Procédé (600) pour la liaison, étanche aux fluides, de deux éléments de construction (100c, 100b), pour la fabrication d'une unité (110) étanche aux fluides selon l'une quelconque des revendications précédentes, où le procédé (600) présente en outre les étapes suivantes :
- la mise à disposition (610) d'au moins un premier élément de construction (100c) qui est plaqué par brasage sur un côté, où le premier élément de construction (100b) présente une bavure de coupe (120) située sur un côté placé à l'opposé de la surface plaquée par brasage ; et
- la liaison (620) étanche aux fluides, en particulier l'assemblage par brasage du premier élément de construction (100c) avec un deuxième élément de construction (100b), pour fabriquer l'unité (110) étanche aux fluides où, lors de la liaison, étanche aux fluides, du premier (100c) et du deuxième (100b) élément de construction, la surface du premier élément de construction (100c), plaquée par brasage, est tournée vers le deuxième élément de construction (100b).
